# EUROPEAN PATENT APPLICATION

(11) **EP 4 582 235 A1**
(43) Date of publication of application: **09.07.2025**
(21) Application number: 23860179.3
(22) Date of filing: 24.08.2023
(51) Int. Cl.: B29B 15/08, C08J 3/205, C08J 5/24, B29K 101/10, B29K 105/12

(54) **METHOD OF PRODUCING CARBON FIBER BUNDLE COMPOSITE AND METHOD OF PRODUCING CARBON FIBER COMPOSITE SHEET**

(30) Priority: 31.08.2022 JP 2022137548
(71) Applicant: Mitsubishi Chemical Corporation, Tokyo 100-8251 (JP)
(72) Inventor: IKEDA, Masashi, Tokyo 100-8251 (JP); TSUJIKAWA, Kazuki, Tokyo 100-8251 (JP); ISHIKAWA, Takeshi, Tokyo 100-8251 (JP); MATSUI, Jun, Tokyo 100-8251 (JP)
(74) Representative: Vossius & Partner Patentanwälte Rechtsanwälte mbB
(86) International application number: PCT/JP2023/030542
(87) International publication number: WO 2024/048416

(57) **Abstract**

A method for producing a carbon fiber bundle composite comprising: mixing carbon fiber fluff made of short carbon fibers and a bundling liquid containing an uncured thermosetting resin to obtain a carbon fiber bundle containing the bundling liquid; and adding a curing agent to the bundling liquid to make the bundling liquid thermosetting. A method for producing a carbon fiber composite sheet comprising: mixing carbon fiber fluff made of short carbon fibers and a bundling liquid containing an uncured thermosetting resin to obtain a carbon fiber bundle containing the bundling liquid; making the bundling liquid thermosetting by adding a curing agent; and bonding a plurality of the carbon fiber bundles to each other after adding the curing agent to the bundling liquid.

## Description

### Technical Field

The present invention mainly relates to a method of producing a carbon fiber bundle composite (carbon-fiber bundle composite) and a method of producing a carbon fiber bundle composite sheet.

### Background Art

CFRP (Carbon Fiber Reinforced Plastic), which is a fiber-reinforced plastic using carbon fiber as a reinforcement, is a lightweight material with excellent mechanical properties suitable for parts of automobiles, ships, railcars, manned aircrafts, unmanned aircrafts and other transportation equipment. The importance of CFRP has been increasing in recent years.

It has been proposed to produce a carbon fiber-reinforced thermoplastic by adding a carbon fiber pellet to a thermoplastic resin. The carbon fiber pellet is produced by mixing short carbon fibers with a solution or suspension of a sizing agent to form a carbon fiber aggregate, pelletizing this with a disc pelletizer, and then drying it. (Patent Literature 1)

It is known that a needle-shaped self-assembled carbon fiber bundle is produced by dispersing short carbon fibers in water, adding a small amount of chloroform, and shaking vigorously. It is also known that polyetherimide can be carried on this needle-shaped self-assembled carbon fiber bundle by having dissolved polyetherimide in this chloroform. (Non Patent Literature 1)

### Citation List

### Patent Literature

PTL 1: JPH10-503812A

### Non Patent Literature

NPTL 1: J. R. Baxter, G. R. Palmese, N. J. Alvarez, Applied Materials Today, 20 (2020) 100786

### Summary of Invention

### Technical Problem

An object of the present invention is to provide a novel method for producing a prepreg material using short carbon fibers, which can use either virgin carbon fibers or recycled carbon fibers as raw materials.

Another object of the present invention is to provide a method for producing a prepreg material using short carbon fibers, which includes a process of agglomerating short carbon fibers using a bundling liquid, but does not require a process of removing the solvent in the bundling liquid.

This specification may explicitly or implicitly indicate problems that can be solved by each embodiment of the present invention.

### Solution to Problem

According to one aspect of the present invention, there is provided a method for producing a carbon fiber bundle composite comprising: mixing carbon fiber fluff made of short carbon fibers and a bundling liquid containing an uncured thermosetting resin to obtain a carbon fiber bundle containing the bundling liquid; and adding a curing agent to the bundling liquid to make the bundling liquid thermosetting.

According to another aspect of the present invention, there is provided a method for producing a carbon fiber bundle composite comprising: forming a carbon fiber bundle containing a bundling liquid by agglomerating discontinuous carbon fibers with the bundling liquid, the bundling liquid being a resin composition containing an uncured thermosetting resin and a curing agent.

According to yet another aspect of the present invention, there is provided a method for producing a carbon fiber composite sheet comprising: mixing carbon fiber fluff made of short carbon fibers and a bundling liquid containing an uncured thermosetting resin to obtain a carbon fiber bundle containing the bundling liquid; making the bundling liquid thermosetting by adding a curing agent; and bonding a plurality of the carbon fiber bundles to each other after adding the curing agent to the bundling liquid.

According to yet another aspect of the present invention, there is provided a method for producing a carbon fiber composite sheet comprising: forming a carbon fiber bundle containing a bundling liquid by agglomerating discontinuous carbon fibers with the bundling liquid, and bonding a plurality of the carbon fiber bundles together, wherein the bundling liquid is a resin composition containing an uncured thermosetting resin and a curing agent.

According to yet another aspect of the present invention, there is provided a method for producing a carbon fiber composite sheet comprising: bonding a plurality of carbon fiber bundles together by bringing the carbon fiber bundles into contact with each other and thickening a bundling liquid contained in each of the carbon fiber bundles, wherein discontinuous carbon fibers in each of the carbon fiber bundles are agglomerated by the bundling liquid, and the bundling liquid is a resin composition containing an uncured thermosetting resin, a curing agent, and a thickening agent.

According to yet another aspect of the present invention, there is provided a method for producing a carbon fiber composite sheet comprising: depositing a plurality of carbon fiber bundles to form a carbon fiber bundle layer; compressing the carbon fiber bundle layer; and thereafter thickening a bundling liquid contained in each of the carbon fiber bundles, wherein discontinuous carbon fibers in each of the carbon fiber bundles are agglomerated by the bundling liquid, and the bundling liquid is a resin composition containing an uncured thermosetting resin, a curing agent, and a thickening agent.

### Advantageous Effects of Invention

According to one embodiment of the present invention, there is provided a novel method for producing a prepreg material using short carbon fibers, which can use either virgin carbon fibers or recycled carbon fibers as a raw material.

According to one embodiment of the present invention, there is provided a method for producing a prepreg material using short carbon fibers, which includes a process of agglomerating short carbon fibers using a bundling liquid, but does not require a process of removing the solvent in the bundling liquid.

### Brief Description of Drawings

[Fig. 1] Fig. 1 is a schematic diagram for explaining a relationship between a bundle length of a carbon fiber bundle composite and a fiber length of carbon fibers forming the carbon fiber bundle composite.
[Fig. 2] Fig. 2 is a photograph showing a carbon fiber bundle composite having a seed-like appearance.
[Fig. 3] Fig. 3 is a conceptual diagram showing a producing apparatus for a carbon fiber bundle composite sheet.
[Fig. 4] Fig. 4 is a photograph showing a carbon fiber bundle composite placed in a plastic bag having a zipper and crushed.
[Fig. 5] Fig. 5 is a photograph showing a carbon fiber composite sheet.

### Description of Embodiments

When viscosity values are mentioned in this specification, unless otherwise specified, they refer to values measured using a rotational viscometer (for example, HAAKE MARS 40 manufactured by Thermo Fisher Scientific K.K.) under the following conditions.
Measurement mode: constant stress
Stress value: 300 Pa
Frequency: 1.59 Hz
Plate diameter: 25 mm
Plate type: parallel plate
Plate gap: 0.5 mm

Carbon fibers are usually manufactured as continuous fibers having a length that can be wound on a spool. Short carbon fibers are produced by cutting continuous carbon fibers. Short carbon fibers can be referred to as cut carbon fibers or discontinuous carbon fibers.

The embodiments of the present invention will be described in detail below.

### 1. Producing method of carbon fiber bundle composite

One embodiment of the present invention relates to a method for producing a carbon fiber bundle composite (hereinafter sometimes abbreviated as "CBC"). This producing method includes mixing carbon fiber fluff made of short carbon fibers and a bundling liquid containing an uncured thermosetting resin to obtain a carbon fiber bundle containing the bundling liquid; and adding a curing agent to the bundling liquid to make the bundling liquid thermosetting.

Hereinafter, explanation will be made on the producing method according to the embodiment including an embodiment of a method using virgin carbon fiber as a starting material and an embodiment of a method using recycled carbon fiber as a starting material.

### 1.1. Method using virgin carbon fiber as a starting material

A method using virgin carbon fiber as a starting material typically includes the following steps (i) to (iii).
(i) Chopping process
(ii) Loosening process
(iii) Bundling process

The details of each step will be explained below.

### (i) Chopping process

In the chopping process, a continuous carbon fiber bundle made of virgin carbon fibers is cut at predetermined intervals in the fiber direction using, for example, a rotary cutter to obtain a chopped carbon fiber bundle.

The bundle size of the continuous carbon fiber bundle (the number of carbon fiber filaments constituting the bundle) is, for example, 10K or more, and may be 12K or more, 15K or more, 24K or more, 36K or more, 48K or more, or 50K or more. Although there is no particular upper limit to the bundle size, it is, for example, 100K or less.

"K" here is a symbol representing 1000. For example, 1K means 1000 and 10K means 10000.

The larger the bundle size of the continuous carbon fiber bundle, the greater the number of carbon fiber filaments contained in one chopped carbon fiber bundle, so the production efficiency of CBC becomes higher. In addition, the cost of producing continuous carbon fiber bundles also decreases with increasing bundle size. Therefore, the bundle size of the continuous carbon fiber bundle is preferably 24K or more, more preferably 36K or more, and even more preferably 48K or more.

The diameter of the carbon fiber filament is generally in the range of 5 µm to 15 µm for a PAN-based carbon fiber made from polyacrylonitrile fiber.

The fiber length of the chopped fiber bundle is set to the length required for the carbon fibers constituting the CBC to be produced. This is because there is no process of intentionally cutting the carbon fibers after the chopping process.

Although the fiber length of the chopped fiber bundle is not limited, it is, for example, 3 mm or more, and may be 5 mm or more, or 10 mm or more. Although the fiber length of the chopped fiber bundle is not limited, it is, for example, 60 mm or less, and may be 50 mm or less, 40 mm or less, 30 mm or less, or 20 mm or less.

The longer the fiber length of the chopped carbon fiber bundle, the better the mechanical properties of the CFRP product molded using the produced CBC tend to be. On the other hand, the shorter the fiber length of the chopped carbon fiber bundle, the more suitable the produced CBC is for molding a CFRP product having a complex shape. This is because the shorter the carbon fibers contained in the CBC, the easier it tends to flow in the mold.

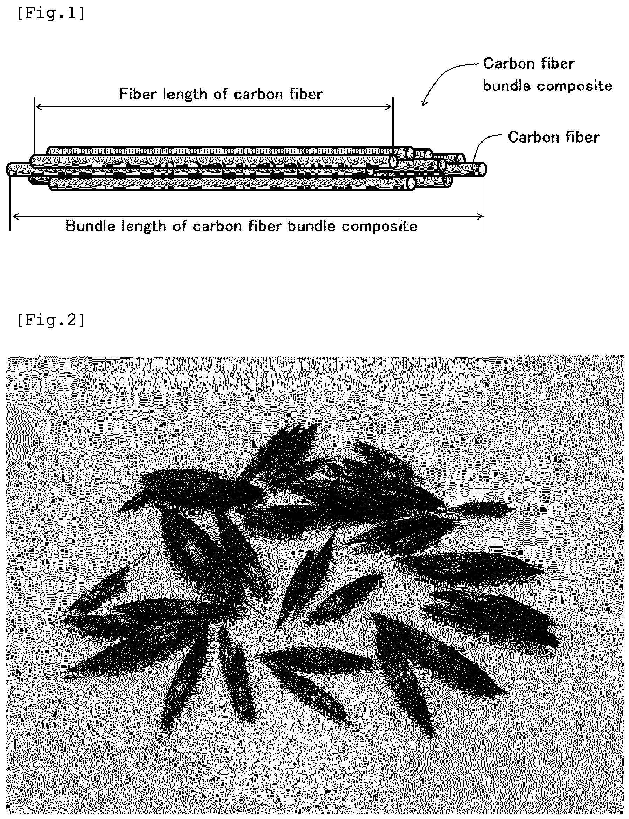

A bundle length of a CBC formed from multiple short carbon fibers having the same fiber length is usually longer than the fiber length of the short carbon fibers, as shown in Fig. 1. In one example, the bundle length of the CBC may be more than twice the fiber length of the short carbon fibers, or even more than three times.

### (ii) Loosening process

In the loosening process, carbon fiber fluff is obtained by loosening the chopped carbon fiber bundles obtained in the chopping process.

The loosening is preferably performed so that all of the carbon fibers contained in the chopped carbon fiber bundle become monofilament-like, but this is not essential. That is, the carbon fiber fluff obtained in the loosening process may include extremely fine carbon fiber bundles consisting of a small number of filaments, for example, less than 100 filaments.

A common loosening machine can be used in the loosening process. The loosening machine used is not limited.

In one example, the loosening can be carried out by putting only the chopped carbon fiber bundles into an agitation mixer such as a Henschel mixer and stirring them in a dry state. This method has the advantage that it is possible to proceed to the next bundling process without taking out obtained carbon fiber fluff from the agitation mixer.

In one example, the chopped carbon fiber bundles can also be loosened by dipping them in an organic solvent, such as acetone, that can dissolve the sizing agent contained in the chopped carbon fiber bundles, and then irradiating them with ultrasonic waves. After washing off the sizing agent, carbon fiber in fluffy form remains.

### (iii) Bundling process

In the bundling process, the carbon fiber fluff obtained in the loosening process is mixed with a bundling liquid. The bundling liquid is a resin composition.

The carbon fiber filaments constituting the carbon fiber fluff or extremely fine carbon fiber bundles are agglomerated by capillary force based on the surface tension of the bundling liquid to form a carbon fiber bundle containing the bundling liquid.

### <Viscosity of bundling liquid>

The lower the viscosity of the bundling liquid, the easier it is to mix with the carbon fiber fluff, and the shorter the time required to form the carbon fiber bundle. From this viewpoint, the viscosity of the bundling liquid when mixed with the carbon fiber fluff in the bundling process is preferably 10 Pa·s or less, more preferably 5 Pa·s or less, and even more preferably 1 Pa·s or less. There is no particular lower limit to this viscosity, but it may be, for example, 0.001 Pa·s or more.

In the bundling process, the bundling liquid may be heated before use. For example, a bundling liquid having viscosity of 10 Pa·s at 25°C may be used without heating when the bundling process is performed in a room having a temperature of 25°C, but it is preferable to heat it until the viscosity becomes 10 Pa·s or less when the bundling process is performed in a room having a temperature of 15°C.

In order to prevent a bundling liquid having viscosity of 10 Pa·s at 50°C from curing during heating to 50°C and mixing with carbon fiber fluff, a curing agent that does not exhibit curing effect at 50°C or lower may be selected as the curing agent cantained in the bundling liquid.

In the case of a bundling liquid having viscosity of 10 Pa·s at 40°C, when a curing agent that does not exhibit curing effect at 40°C or lower is selected as the curing agent to be contained in the bundling liquid, the bundling liquid will not cure during heating to 40°C and mixing with the carbon fiber fluff.

In this way, the lower the temperature at which the viscosity of the bundling liquid becomes 10 Pa·s, the wider the options are when selecting a curing agent that does not cure the bundling liquid when mixed with carbon fiber fluff at that temperature.

Therefore, the viscosity of the bundling liquid is preferably 10 Pa·s or less at 50°C, more preferably 10 Pa·s or less at 40°C, and even more preferably 10 Pa·s or less at 30°C.

The viscosity of the bundling liquid can be adjusted by a reactive diluent, as described below.

### <Thermosetting resin>

An uncured thermosetting resin is blended to the bundling liquid. There is no limit to the type of the thermosetting resin, but suitable examples include epoxy resin, vinyl ester resin, unsaturated polyester resin, and resol-type phenolic resin.

Examples of thermosetting resins that can be contained in the bundling liquid further include various (meth)acrylates (compounds having an acryloyl group or methacryloyl group) other than epoxy vinyl ester, and diallyl phthalate. The various (meth)acrylates include alkyl (meth)acrylates that may have a substituent on the alkyl group, and urethane acrylate.

The bundling liquid may contain two or more types of thermosetting resins.

### <Epoxy resin>

There is no limit to the type of epoxy resin that can be contained in the bundling liquid, and various types of epoxy resins can be used, including bisphenol type epoxy resin, naphthalene type epoxy resin, biphenyl type epoxy resin, novolac type epoxy resin, glycidylamine type epoxy resin, epoxy resin having an oxazolidone ring structure, alicyclic epoxy resin, and aliphatic epoxy resin.

When epoxy resins having different viscosities are used in combination, generally, the more lower viscosity epoxy resin is included, the lower the viscosity of the bundling liquid.

Epoxy resins that can be particularly preferably contained in the bundling liquid are bisphenol type epoxy resins such as bisphenol A type epoxy resin (epoxy resin based on diglycidyl ether of bisphenol A), bisphenol F type epoxy resin (epoxy resin based on diglycidyl ether of bisphenol F), and the like.

Among commercially available bisphenol type epoxy resins, there are varieties having viscosity of 5 Pa·s or less at 25°C, which can be preferably used.

In one example, 50 wt% or more, 60 wt% or more, 65 wt% or more, 70 wt% or more, or 75 wt% or more of the total epoxy resin contained in the bundling liquid may be bisphenol type epoxy resin.

Bisphenol type epoxy resin, especially bisphenol A type epoxy resin, has the advantage that it shrinks relatively little when cured and the heat resistance of the cured product is relatively good. Therefore, the bundling liquid preferably contains at least one of bisphenol A type and bisphenol F type epoxy resins, and more preferably contains bisphenol A type epoxy resin.

### <Vinyl ester resin>

The type of vinyl ester resin that can be contained in the bundling liquid is not particularly limited, but typical examples include bisphenol type vinyl ester resin and novolac type vinyl ester resin.

Bisphenol type vinyl ester resin is produced by esterifying a bisphenol type epoxy resin such as bisphenol A type epoxy resin with an unsaturated monocarboxylic acid, typically acrylic acid or methacrylic acid.

Novolac type vinyl ester resin is produced by esterifying novolac type epoxy resin such as phenol novolac type epoxy resin with an unsaturated monocarboxylic acid, typically acrylic acid or methacrylic acid.

### <Unsaturated polyester resin>

The type of unsaturated polyester resin that can be contained in the bundling liquid is not particularly limited. Unsaturated polyester resin is mainly composed of polymer containing a structure in which dicarboxylic acid including fumaric acid, maleic acid and/or maleic anhydride and diol are polycondensed.

### <Reactive diluent>

As mentioned above, the viscosity of the bundling liquid can be adjusted by a reactive diluent. The compound contained in the bundling liquid as a reactive diluent may be only one type or may be two or more types.

When epoxy resin is blended into the bundling liquid, known reactive diluent for epoxy resin can be used as appropriate. Examples of reactive diluents for epoxy resins that have high viscosity reducing effect include, but are not limited to, mono-functional epoxy compounds having only one epoxy group in the molecule.

Methylhexahydrophthalic anhydride and tetrahydromethylphthalic anhydride act as an thickening agent or a curing agent for an epoxy resin, and also as a diluent, so they can be considered as a type of the reactive diluent.

When at least one of vinyl ester resin and unsaturated polyester resin is blended into the bundling liquid, a reactive diluent can be blended with a compound that has one or two ethylenically unsaturated groups in the molecule and has low viscosity of preferably 1 Pa·s or less at 25°C.

Examples of such compounds include styrene-based compounds such as styrene, methylstyrene, halogenated styrene, divinylbenzene, and the like; monofunctional (meth)acrylates such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl (meth)acrylate, phenyl methacrylate, dicyclopentenyl (meth)acrylate, dicyclopentenyloxyethyl (meth)acrylate, dicyclopentanyl methacrylate, and the like; hydroxyl group containing (meth)acrylates such as hydroxyethyl (meth)acrylate, hydroxypropyl (meth)acrylate, hydroxybutyl (meth)acrylate, and the like; and bifunctional (meth)acrylates such as ethylene glycol di(meth)acrylate, propylene glycol di(meth)acrylate, 1,4-butanediol di(meth)acrylate, 1,6-hexanediol di(meth)acrylate, bisphenol di(meth)acrylate, 1,4-cyclohexanedimethanol di(meth)acrylate, and the like.

### <Thickening agent>

In a preferred embodiment, a thickening agent may be added to the bundling liquid to increase the viscosity of the bundling liquid after the bundling process to, for example, 50 Pa·s or more at 25°C. By thickening the bundling liquid in this manner, the shape of the CBC formed in the bundling process is stabilized.

For example, when a large amount of CBCs are packed into a large-capacity container for transportation or storage, strong pressure due to their own weight is applied to the CBCs near the bottom of the container. In this case, when the bundling liquid is thickened, the CBCs are less likely to collapse, stick to each other, or bleed out of the liquid components.

When a thickening agent is used, it is preferable to add the thickening agent to the bundling liquid immediately before mixing the bundling liquid with the carbon fiber fluff.

In one embodiment, the bundling liquid may be divided into two liquids: a first liquid that does not contain a thickening agent and a second liquid that contains a thickening agent. In this embodiment, the first liquid may be mixed with the carbon fiber fluff, and then the second liquid may be mixed with the mixture obtained by mixing the first liquid with the carbon fiber fluff, or the order may be reversed, and the second liquid may be mixed with the carbon fiber fluff, and then the first liquid may be mixed with the mixture obtained by mixing the second liquid with the carbon fiber fluff. In this embodiment, the first liquid and the second liquid are mixed during the bundling process to complete the bundling liquid.

The type and amount of thickening agent to be added are determined so that the viscosity of the bundling liquid does not increase during the bundling process, causing problems in the formation of carbon fiber bundles.

When the viscosity of the bundling liquid is 10 Pa·s or less, the bundling process can be completed within one hour, so in a preferred example, the type and amount of thickening agent to be added to the bundling liquid can be determined so that the viscosity does not exceed 10 Pa·s when held for one hour at the temperature at which it is mixed with the carbon fiber fluff.

The viscosity of the bundling liquid containing the thickening agent after thickening may be 100 Pa·s or more, or even 200 Pa·s or more, or even 1000 Pa·s or more, or even 2000 Pa·s or more, or even 5000 Pa·s or more at 25°C, and may be a value that exceeds the range that can be measured using a rotational viscometer.

When the CBC formed in the bundling process is used to produce a carbon fiber composite sheet described below, the viscosity of the bundling liquid containing the thickening agent after thickening may be, for example, in the range of 200 Pa·s or more and 100,000 Pa·s or less. When a bundling liquid having appropriately low viscosity after thickening is used, a flexible carbon fiber composite sheet can be obtained.

In one example, after the bundling process, the carbon fiber bundle formed in the bundling process may be held at a temperature higher than room temperature (a temperature within a range of 20°C ± 15°C), that is, at a temperature exceeding 35°C, to promote thickening of the bundling liquid contained in the carbon fiber bundle. The holding temperature and holding time are set within a range in which the bundling liquid does not cure due to the action of the curing agent.

In one example, the carbon fiber bundle formed in an agitation tank of an agitation mixer can be thickened while being stirred in the agitation tank without taken out from the agitation tank.

In another example, the carbon fiber bundle formed in an agitation tank of an agitation mixer can be thickened by transferring the carbon fiber bundles formed in the agitation tank of the agitation mixer to a disc pelletizer and rolling the carbon fiber bundle to thicken the bundling liquid contained in the carbon fiber bundle.

Examples of thickening agents that can be used when blending epoxy resin into the bundling liquid include polyisocyanates, carboxylic anhydrides, and amines.

Suitable examples of polyisocyanates include diisocyanates having an aromatic ring in the molecular structure, such as bis(4-isocyanatophenyl)methane, toluene diisocyanate, and the like, and aliphatic diisocyanates such as isophorone diisocyanate, hexamethylene diisocyanate, and the like. Suitable examples of polyisocyanates include polymeric MDI (crude MDI).

A Polyisocyanate having low viscosity (preferably 1 Pa·s or less at 25°C) can also function as reactive diluents for a while after it is added to the bundling liquid.

The polyisocyanates may be blended into the bundling liquid together with a polyol. Examples of polyols include ethylene glycol, polyethylene glycol, isosorbide, neopentyl glycol, cyclohexanediol, cyclohexanedimethanol, 1,4-butanediol, 1,5-pentanediol, 3-methyl-1,5-pentanediol, and 1,6-hexanediol.

A polyol having low viscosity (preferably 1 Pa·s or less at 25°C) can also function as a reactive diluent for a while after it is added to the bundling liquid.

Preferable examples of carboxylic acid anhydrides include methylhexahydrophthalic anhydride and tetrahydromethylphthalic anhydride. As described above, these also function as reactive diluents for a while after they are added to the bundling liquid.

Preferable examples of amines include isophorone diamine, bis(4-aminocyclohexyl)methane, and 1,3-bis(aminomethyl)cyclohexane.

Styrene and maleic anhydride may be added as thickening agents together with a radical polymerization initiator to the bundling liquid containing the epoxy resin. In this case, the bundling liquid can be thickened by copolymerizing styrene and maleic anhydride through the action of the radical polymerization initiator. Styrene before polymerization can also function as a reactive diluent.

Preferred thickening agents that can be used when the vinyl ester resin and/or the unsaturated polyester resin are blended into the bundling liquid include polyisocyanates, alkaline earth metal hydroxides such as magnesium hydroxide, calcium hydroxide, and the like, and alkaline earth metal oxides such as magnesium oxide, calcium oxide, and the like.

Preferable examples of polyisocyanates are the same as the suitable examples of polyisocyanates that can be used as thickening agents when the epoxy resin is blended into the bundling liquid.

A polyisocyanate having low viscosity (preferably 1 Pa·s or less at 25°C) can also function as a reactive diluent for a while after it is added to the bundling liquid.

The polyisocyanate may be blended into the bundling liquid together with a polyol. Examples of polyols are the same as the examples of polyols that can be blended together with the polyisocyanate when the epoxy resin is blended into the bundling liquid.

A polyol having low viscosity (preferably 1 Pa·s or less at 25°C) can also function as a reactive diluent for a while after it is added to the bundling liquid.

Examples of thickening agents that can be preferably used when blending resol type phenolic resin into the bundling liquid include alkaline earth metal hydroxides such as magnesium hydroxide, calcium hydroxide, and the like, alkaline earth metal oxides such as magnesium oxide, calcium oxide, and the like, and polyisocyanates.

Even when the thermosetting resin blended into the bundling liquid does not fall into any of epoxy resins, vinyl ester resins, unsaturated polyester resins, and resol type phenolic resins, polyisocyanates can be preferably used as thickening agents. When the thermosetting resin does not contain a hydroxyl group containing component, polyisocyanates may be blended into the bundling liquid together with polyols. Suitable examples of polyisocyanates and polyols are the same as the suitable examples of polyisocyanates and polyols that can be used when blending epoxy resin into the bundling liquid.

### <Curing agent>

The bundling liquid is made thermosetting by adding a curing agent appropriate for the thermosetting resin to be blended.

When epoxy resin is blended into the bundling liquid, a curing agent for epoxy resin (hereinafter also referred to as "epoxy curing agent") is added to the bundling liquid.

Typical examples of epoxy curing agents include dicyandiamides, phenols including novolac, amines, carboxylic anhydrides, thiols and imidazoles.

An epoxy curing agent that can be particularly preferably used is a latent curing agent, that is, a curing agent that is a solid having low solubility in epoxy resin at room temperature, but has a property of melting or dissolving in the epoxy resin when heated to a predetermined temperature and exhibiting a curing function as a curing agent.

Imidazoles, dicyandiamide and boron trifluoride-amine complexes are typical examples of latent curing agents.

Imidazoles are compounds having an imidazole ring, and include substituted imidazoles in which the hydrogen atom of imidazole is substituted with a substituent, as well as imidazolium salts, imidazole complexes, and the like.

Preferred examples of substituted imidazole as the latent curing agent include substituted imidazoles having an aromatic ring which may be a heteroaromatic ring in the molecule, such as 2,4-diamino-6-[2'-methylimidazolyl-(1')]-ethyl-s-triazine, 2-phenyl-4-methylimidazole, 2-phenyl-4-methyl-5-hydroxymethylimidazole, 2-phenyl-4-benzyl-5-hydroxymethylimidazole, 2-phenyl-4,5-dihydroxymethylimidazole, 2- paratoluyl-4-methyl-5-hydroxymethylimidazole, 2-paratoluyl-4,5-dihydroxymethylimidazole, 2-methatoluyl-4-methyl-5-hydroxymethylimidazole, 2-methatoluyl-4,5-dihydroxymethylimidazole, 1-cyanoethyl-2-phenylimidazole, and the like.

Also imidazolium salts such as 1-cyanoethyl-2-ethyl-4-methylimidazolium trimellitate, 1-cyanoethyl-2-undecylimidazolium trimellitate, 1-cyanoethyl-2-phenylimidazolium trimellitate, and the like are suitable examples of imidazole-based latent curing agents.

Isocyanuric acid adducts of various substituted imidazoles such as 2-phenylimidazole, 2-methylimidazole, 2-phenyl-4,5-dihydroxymethylimidazole, 2-phenyl-4-methyl-5-hydroxymethylimidazole, and the like, especially isocyanuric acid adducts of substituted imidazoles having a triazine ring such as 2,4-diamino-6-(2'-methylimidazolyl-(1'))-ethyl-s-triazine, 1-(4,6-diamino-s-triazin-2-yl)ethyl-2-undecylimidazole, 2,4-diamino-6-[2-(2-ethyl-4-methyl-1-imidazolyl)ethyl]-s-triazine, and the like are particularly preferred examples of imidazole-based latent curing agents.

Amine adducts are also preferred examples of latent curing agents. Amine adducts are obtained by reacting imidazole and/or tertiary amine with epoxy resin and/or isocyanate to increase the molecular weight, and have relatively low solubility in epoxy resin.

The latent curing agent may be used alone or in combination of two or more.

When dicyandiamide is used as the epoxy curing agent, it is preferable to use, in addition thereto, a urea derivative such as 4,4'-methylenebis(phenyldimethylurea), 2,4-bis(3,3-dimethylureido)toluene, or the like as a curing accelerator.

When vinyl ester resin and/or unsaturated polyester resin are blended in the bundling liquid, a radical polymerization initiator is added to the bundling liquid as a curing agent. The radical polymerization initiator may be used alone or in combination of two or more.

Typical examples of radical polymerization initiators include organic peroxides such as ketone peroxides, hydroperoxides, diacyl peroxides, dialkyl peroxides, peroxyketals, alkyl peresters, percarbonates, and the like.

Suitable examples of organic peroxides include 1,1-di(t-butylperoxy)cyclohexane, t-butylperoxyisopropylcarbonate, t-amylperoxyisopropylcarbonate, methyl ethyl ketone peroxide, t-butylperoxybenzoate, benzoyl peroxide, dicumyl peroxide, acetylacetone peroxide, and cumene hydroperoxide.

The radical polymerization initiator preferably has a 10 hour half-life temperature in the range of 70 to 120°C, more preferably in the range of 80 to 110°C, and even more preferably in the range of 90 to 100°C. The 10 hour half-life temperature is the temperature at which the half-life of a polymerization initiator dissolved in benzene when thermally decomposed at a constant temperature is 10 hours. For the measurement, a benzene solution containing the polymerization initiator at a concentration of 0.2 mol/L is used.

For organic peroxides having a 10 hour half-life temperatures within the above preferred range, reference can be made to, for example, WO 2019/017254 A1.

When a radical polymerization initiator is added to the bundling liquid, it is preferable to also add a radical polymerization inhibitor to the bundling liquid. Radical polymerization inhibitors are well known to those skilled in the art, and suitable examples include catechol, hydroquinone, benzoquinone, and nitroso compounds.

When the resol type phenolic resin is blended into the bundling liquid, examples of components that can be included in the bundling liquid as a curing agent include organic acids such as benzenesulfonic acid, paratoluenesulfonic acid, xylenesulfonic acid, phenolsulfonic acid, and the like; inorganic acids such as phosphoric acid, hydrochloric acid, sulfuric acid, and the like; amines such as triethylamine, tri-n-propylamine, diethylamine, n-propylamine, n-butylamine, aniline, benzylamine, and the like; and reaction products of isocyanates with primary amines and/or secondary amines.

### <Optional Components>

Components that can be included in the bundling liquid are not limited to those described above.

Further examples of components that can be included in the bundling liquid include a low shrinkage agent, an antioxidant, an internal release agent, a coloring agent, a modifier (for example, a rubber, an elastomer or a thermoplastic resin), a flame retardant, a filler, and an antimicrobial agent.

Examples of low shrinkage agents include polyethylene, polystyrene, styrene-based thermoplastic elastomers, crosslinked polystyrene, polyvinyl acetatepolystyrene block copolymers, polyvinyl acetate, polymethyl methacrylate, and saturated polyester resins.

Examples of fillers include inorganic fillers which may be oxides, hydroxides, carbonates, sulfates, silicates, phosphates, or clay minerals. Other examples of fillers include organic fillers which may be cured products of thermosetting resins such as phenolic resins and resorcinol resins.

The following is an explanation of the flame retardant that can be added to the bundling liquid.

Preferred flame retardants include phosphorus-containing flame retardants.

Examples of phosphorus-containing flame retardants include non-halogen phosphoric acid esters such as trimethyl phosphate, triethyl phosphate, tributyl phosphate, trioctyl phosphate, tributoxyethyl phosphate, triphenyl phosphate, tricresyl phosphate, cresyl diphenyl phosphate, octyl diphenyl phosphate, aromatic polyphosphates, and the like.

Other examples of phosphorus-containing flame retardants include halogenated phosphoric acid esters such as tris(chloroethyl)phosphate, tris(dichloropropyl)phosphate, tris(chloropropyl)phosphate, bis(2,3-dibromopropyl)2,3-dichloropropylphosphate, tris(2,3-dibromopropyl)phosphate, bis(chloropropyl)octylphosphate, halogenated alkylpolyphosphate, halogenated alkylpolyphosphonate, and the like.

A further example of a phosphorus-containing flame retardant is a phosphinic acid metal salt. The phosphinic acid metal salts here include not only metal salts of phosphinic acids having no organic groups, but also metal salts of organic phosphinic acids such as diphenylphosphinic acid, monophenylphosphinic acid, dialkylphosphinic acid, monoalkylphosphinic acid, alkylphenylphosphinic acid, and the like, as well as metal salts of diphosphinic acid such as methanedi(methylphosphinic acid), benzene-1,4-di(methylphosphinic acid), and the like.

Examples of the dialkylphosphinic acids include dimethylphosphinic acid, ethylmethylphosphinic acid, diethylphosphinic acid, and methyl-n-propylphosphinic acid.

Examples of monoalkylphosphinic acids include methylphosphinic acid, ethylphosphinic acid, and n-propylphosphinic acid.

An example of an alkylphenylphosphinic acid is methylphenylphosphinic acid.

Phosphinic acid metal salts can be, but are not limited to, aluminum salts, zinc salts, calcium salts, and magnesium salts.

Further examples of phosphorus-containing flame retardants include red phosphorus, ammonium polyphosphate, melamine phosphate, guanidine phosphate, guanylurea phosphate, and the like.

In addition to the phosphorus-containing flame retardant, a phosphorus-free flame retardant can be added to the bundling liquid.

Examples of phosphorus-free flame retardants include melamine compounds such as melamine cyanurate, and the like; nitrogen-based flame retardants such as triazine compounds, guanidine compounds, ammonium carbonate, and the like; hydrated metals such as aluminum hydroxide, magnesium hydroxide, and the like, and organometallic salt flame retardants such as ferrocene, acetylacetone metal complexes, and the like.

In a preferred embodiment, all materials to be mixed into the bundling liquid are selected to be halogen-free. Thereby, a halogen-free final product, CBC is obtained.

Another example of an optional component that can be added to the bundling liquid includes an uncured thermosetting resin powder that is solid at the temperature at which the bundling liquid is mixed with the carbon fiber fluff and is not dissolved in the bundling liquid.

For example, when liquid epoxy resin is included in the bundling liquid, uncured epoxy resin powder can be used as the uncured thermosetting resin powder.

For example, when liquid phenol resin is included in the bundling liquid, uncured phenol resin powder can be used as the uncured thermosetting resin powder.

### <Mixing carbon fiber fluff and bundling liquid>

There is no limitation on the method for mixing the carbon fiber fluff and the bundling liquid, but agitating is preferred to mix efficiently in a short time.

For agitating, a powder agitation mixer known as a Henschel mixer can be preferably used. The agitation mixer may be a type equipped with only an agitator blade (stirring blade), or may be a type further equipped with a chopper. In an agitation mixer having a jacket, the temperature of the agitation tank can be adjusted by flowing a heat medium inside the jacket.

In addition to the agitation mixer, a tumbler mixer without a agitating mechanism can be used to mix the carbon fiber fluff and the bundling liquid.

In one example, the bundling liquid or a liquid component to be contained in the bundling liquid can be supplied into the agitation tank of the agitation mixer by spraying.

When the temperature T_{A} at which the viscosity of the bundling liquid falls within the above mentioned preferred range is higher than the temperature T_{B} of a room in which the bundling process is performed, at least one of the bundling liquid, the carbon fiber fluff, and the agitation tank, and preferably all of them, may be heated to the temperature T_{A} before mixing the bundling liquid and the carbon fiber fluff in the agitation tank of the agitation mixer. In this case, either the bundling liquid or the carbon fiber fluff may be heated to the temperature T_{A} in the agitation tank.

The timing for adding the curing agent to the bundling liquid may be before mixing the bundling liquid with the carbon fiber fluff, or may be simultaneous with mixing the bundling liquid with the carbon fiber fluff.

The entire curing agent may be added to the bundling liquid at the same time, or a part of the curing agent and another part of the curing agent may be added to the bundling liquid at different times.

When using two or more types of curing agents, the timing for adding them to the bundling liquid may be changed depending on the type.

A curing agent that is liquid or soluble in the bundling liquid at the temperature when the bundling liquid is mixed with the carbon fiber fluff is preferably added to the bundling liquid before mixing the bundling liquid with the carbon fiber fluff.

A curing agent that is solid and insoluble in the bundling liquid at the temperature when the bundling liquid is mixed with the carbon fiber fluff may be added to the bundling liquid before mixing the bundling liquid with the carbon fiber fluff, or may be added to the bundling liquid at the same time as mixing the bundling liquid with the carbon fiber fluff. Such a curing agent is a powder or fine powder, and its maximum particle size is, for example, 150 µm or less, preferably 100 µm or less, more preferably 50 µm or less, and even more preferably 20 µm or less.

In order to add the curing agent into the bundling liquid at the same time as mixing the bundling liquid and the carbon fiber fluff, the carbon fiber fluff and the curing agent are first mixed, and then the bundling liquid containing components other than the curing agent is added to the resulting mixture.

There is no particular restriction on the timing of adding components other than the curing agent into the bundling liquid.

Like the curing agent, a component that is liquid or dissolve in the bundling liquid at the temperature when the bundling liquid is mixed with the carbon fiber fluff is preferably added into the bundling liquid before mixing the bundling liquid with the carbon fiber fluff. However, it is also acceptable to add such component into the bundling liquid during the bundling process as necessary.

A component that is solid and insoluble in the bundling liquid at the temperature when the bundling liquid is mixed with the carbon fiber fluff may be added to the bundling liquid before mixing the bundling liquid with the carbon fiber fluff, or may be added to the bundling liquid at the same time as mixing the bundling liquid with the carbon fiber fluff. Such a component is usually a powder or fine powder, and its maximum particle size is, for example, 150 µm or less, preferably 100 µm or less, more preferably 50 µm or less, and even more preferably 20 µm or less.

The ratio of the weight of the carbon fiber fluff to the total weight of the bundling liquid and the carbon fiber fluff to be mixed with each other may be 20% or more and less than 30%, 30% or more and less than 40%, 40% or more and less than 50%, 50% or more and less than 60%, 60% or more and less than 70%, or 70% or more and 80% or less. This ratio is approximately equal to the fiber weight content in the final product, CBC. Actually, since the carbon fiber fluff made of virgin carbon fibers contains a sizing agent, the value obtained by multiplying the above ratio by the weight ratio of carbon fibers in the carbon fiber fluff becomes the fiber weight content of CBC.

When the same carbon fiber fluff and bundling liquid are used as raw materials, the smaller the above ratio, the thicker the CBC formed will tend to be and the longer the bundle length will tend to be. When the same carbon fiber fluff is used, the higher the viscosity of the bundling liquid, the longer the bundle length of the CBC formed will tend to be. According to observations made in experiments conducted by the present inventors, these two tendencies seem to be weakened when the bundling liquid contains powder and/or fine powder made of a component that is solid at the temperature when mixed with the carbon fiber fluff and is not dissolved in the bundling liquid.

### 1.2. Method using recycled carbon fiber as starting material

In the method for producing CBC described in 1.1 above, all or part of the virgin carbon fiber as a starting material can be replaced with recycled carbon fiber.

A preferred example of recycled carbon fiber is carbon fiber recovered from waste SMC such as offcuts of SMC (sheet molding compound) or waste CFRP derived from SMC (CFRP obtained by curing SMC). Almost all of the carbon fibers contained in SMC have the same fiber length, which is usually in the range of 3 mm to 60 mm. SMC may contain a small amount of carbon fibers longer than the intended fiber length, which is caused by miscutting of the carbon fiber bundle during the producing process. The proportion of such carbon fibers in all the carbon fibers contained in SMC is usually less than 1% by weight.

Methods for recovering carbon fibers from waste SMC or waste CFRP derived from SMC are broadly divided into thermal decomposition and chemical decomposition.

In a suitable example of thermal decomposition, waste SMC or waste CFRP derived from SMC is dry distilled at a temperature of preferably 600°C or higher, and further heated in an oxidizing atmosphere to, for example, 550°C or higher, preferably 600°C or higher. When the matrix resin is completely thermally decomposed by this two-stage process, carbon fiber fluff consisting of recycled carbon fibers having almost the same fiber length remains. This recycled carbon fiber is thermally degraded and has lower strength than virgin carbon fiber, but it has sufficient strength to be used as a reinforcing material for FRP.

A typical example of a heating means used in the thermal decomposition method is an electric furnace, but means such as microwave heating and induction heating can also be used. In one example of a thermal decomposition method, waste CFRP can be treated in superheated steam.

Examples of the chemical decomposition method include a normal pressure dissolution method, a supercritical fluid method (a method of decomposing matrix resin using subcritical or supercritical fluid), a semiconductor thermal activation method, and an electrolytic oxidation method. The matrix resin needs to be sufficiently removed so that fluff-like recycled carbon fiber can be obtained. Resin residue (residual carbon) that cannot be completely removed by the chemical decomposition method may be removed by heat treatment in an oxidizing atmosphere.

Instead of subjecting the resin residue that could not be completely removed by one-stage thermal decomposition or chemical decomposition to thermal decomposition in an oxidizing atmosphere, it is also possible to obtain fluff-like recycled carbon fibers by mechanically destroying the bonds between the carbon fibers caused by the resin residue. This operation can be carried out using an agitation mixer having a rotating blade, such as a Henschel mixer.

Another method for recovering carbon fibers from waste SMC is to wash out the uncured matrix resin using a solvent that may be a subcritical fluid or supercritical fluid. According to this method, it is possible to obtain recycled carbon fibers that are not thermally degraded and have strength equivalent to that of virgin carbon fibers.

Recycled carbon fibers recovered from waste CFRP derived from SMC or waste SMC are short fibers that usually have a fiber length in the range of 3 mm to 60 mm. This recycled carbon fiber does not require further cutting for use in the production of CBC, and the sizing agent has also been removed. When only such recycled carbon fibers are used as a starting material, (i) chopping process and (ii) loosening process are not necessary, and only the above mentioned (iii) bundling process needs to be performed.

As recycled carbon fibers, carbon fibers recovered from waste UD prepregs or waste CFRP derived from UD prepregs (CFRP obtained by curing UD prepregs) by the above mentioned thermal decomposition method or chemical decomposition method can also be used.

The recycled carbon fibers obtained from waste UD prepregs or waste CFRP derived from UD prepregs are cut to an appropriate length before being used in the production of CBCs. The length of the recycled carbon fibers after cutting is, for example, 3 mm or more, and may be 5 mm or more or 10 mm or more, and is, for example, 60 mm or less, and may be 50 mm or less, 40 mm or less, 30 mm or less, or 20 mm or less.

The longer the fiber length of the recycled carbon fiber, the better the mechanical properties of the CFRP product molded using the produced CBC tend to be. On the other hand, the shorter the fiber length of the recycled carbon fiber, the more suitable the produced CBC is for molding a CFRP product having a complex shape. This is because the shorter the carbon fibers contained in the CBC, the easier it tends to flow in the mold.

Fibers other than carbon fibers may be mixed in the fluff-like recycled carbon fibers. For example, in the carbon fiber fluff recovered from CFRP in which a carbon fiber cloth containing stitches made of glass fibers is used as a reinforcing material, contamination with glass fibers may be observed.

When using recycled carbon fibers as a starting material, fibers other than the carbon fibers mixed into the carbon fiber fluff may be removed before use, but this is not essential. That is, in the producing method according to the embodiment, the carbon fiber fluff mixed with fibers other than carbon fibers may be used as a starting material of the CBC.

### 2. Carbon fiber bundle composite

Another embodiment of the present invention is a CBC produced by the producing method described in the above mentioned 1. section. This CBC is composed of a plurality of short carbon fibers and a bundling liquid, and the plurality of the short carbon fibers are held in a bundled state by the bundling liquid. Due to the producing method, the positions of the tips of the plurality of the short carbon fibers are uneven at each end of the CBC. The bundling liquid is a resin composition that contains an uncured thermosetting resin and a curing agent.

The number of short carbon fibers (the number of filaments) forming the bundle that is the number of short carbon fibers contained in one CBC, may be, for example, 1,000 to 10,000. 99% by weight or more, and preferably all, of the short carbon fibers forming the bundle in one CBC may have a fiber length of 60 mm or less, 50 mm or less, 40 mm or less, 30 mm or less, or 20 mm or less.

The shorter the fiber length of all the short carbon fibers contained in the CBC is, such as 60 mm or less, 50 mm or less, 40 mm or less, 30 mm or less, or 20 mm or less, the more suitable the CBC is for molding a CFRP product having complex shape. This is because the shorter the carbon fibers contained in the CBC, the easier it tends to flow in the mold.

Since carbon fibers whose fiber length is too short have a low effect as a reinforcing material, the majority of the short carbon fibers forming the bundles in one CBC preferably have a fiber length of 3 mm or more, more preferably 5 mm or more, and even more preferably 10 mm or more, by weight.

In a preferred example, the CBC contains no carbon fiber having a fiber length of less than 3 mm, or even when such a carbon fiber is contained therein, its content is less than 5 wt% based on the total carbon fibers contained in the CBC.

In a more preferred example, the CBC contains no carbon fiber having a fiber length of less than 5 mm, or even when such a carbon fiber is contained therein, its content is less than 5 wt% based on the total carbon fibers contained in the CBC.

In an even more preferred example, the CBC contains no carbon fiber having a fiber length of less than 10 mm, or even when such a carbon fiber is contained therein, its content is less than 5 wt% based on the total carbon fibers contained in the CBC.

In a CBC in which the majority of the short carbon fibers forming the bundles have a fiber length of L (mm) or more, by weight, the bundle length usually exceeds L (mm).

The shape of the CBC may be seed-shaped (spindle-shaped), needle-shaped or wire-shaped. Fig. 2 shows a photograph of the appearance of a seed-shaped (spindle-shaped) CBC.

In one embodiment, by composing the CBC only from short carbon fibers having the same fiber length, it is possible to suppress variations in quality between producing lots. In this case, the difference between the maximum and minimum fiber lengths between the short carbon fibers forming the bundle is preferably within 5 mm, more preferably within 4 mm, and even more preferably within 3 mm.

The filament diameter of the short carbon fibers forming the bundle is not particularly limited, but may be within the filament diameter range that PAN-based carbon fibers normally have, for example, within the range of 5 µm to 15 µm.

The bundling liquid contained in the CBC is the same bundling liquid used to form the CBC. Therefore, the types and preferred examples of uncured thermosetting resins that the CBC may contain are the same as those in the bundling liquid (for example, preferred examples of uncured thermosetting resins that the CBC may contain include epoxy resins, vinyl ester resins, unsaturated polyester resins, and resol type phenolic resins, just like the preferred examples of uncured thermosetting resins that may be contained in the bundling liquid).

The same applies for the types and preferred examples of components other than the uncured thermosetting resin contained in the CBC, and they are the same as those in the bundling liquid used to form the CBC. However, not all of the components contained in the bundling liquid are necessarily contained in the CBC in the same state as when the CBC was formed. In particular, compounds involved in thickening reactions usually change into different compounds over time after the CBC is formed.

The fiber weight content in the CBC may be, for example, 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.

From the viewpoint of improving the mechanical properties of CFRP products molded using the CBC, the fiber content is preferably 30 wt% or more, more preferably 40 wt% or more, and even more preferably 50 wt% or more.

On the other hand, the lower the fiber content, the easier the CBC will flow in the mold, making it more suitable for molding CFRP products having complex shapes. From this viewpoint, the fiber content is preferably less than 70 wt%, and more preferably less than 60 wt%.

All of the carbon fibers included in the CBC may be virgin carbon fibers, some may be virgin carbon fibers and the remaining carbon fibers may be recycled carbon fibers, or all may be recycled carbon fibers.

All of the carbon fibers included in the CBC may be carbon fibers that have not been thermally degraded, some may be carbon fibers that have not been thermally degraded and the remaining carbon fibers may be thermally degraded carbon fibers, or all may be thermally degraded carbon fibers.

A typical example of carbon fiber that has not been thermally degraded is virgin carbon fiber.

A typical example of thermally degraded carbon fibers is recycled carbon fibers recovered from waste CFRP, which are thermally degraded during the process of thermally decomposing and removing the matrix resin.

The CBC may contain fibers other than carbon fibers. For example, when recycled carbon fibers containing glass fibers are used as the starting material, a CBC consisting of a plurality of the short carbon fibers bundled together with glass fibers and a resin composition containing an uncured thermosetting resin and a curing agent is obtained.

When the CBC contains fibers other than carbon fiber, the content of such fibers is preferably less than 10 wt%, more preferably less than 5 wt%, and even more preferably less than 1 wt%, based on the total amount of carbon fiber contained in the CBC.

In this specification, the fiber weight content in a CBC containing fibers other than carbon fiber means the ratio of the total weight of carbon fiber contained in the CBC based on the weight of the CBC.

The CBC can be used, for example, as an intermediate material when producing CFRP products by press molding.

The CBC can also be used to produce carbon fiber composite sheets, which will be explained in 3. below.

### 3. Carbon fiber composite sheet

Using the CBC, for example, a carbon fiber composite sheet, which is a sheet-shaped thermosetting molding material, can be produced by sequentially performing the following first to third steps.
First step: Provide a first protective film and a second protective film.
Second step: Sprinkle the CBC on the first protective film to deposit a CBC layer.
Third step: After covering the CBC layer with the second protective film, the CBC contained in the CBC layer is bonded to each other.

The material of the first protective film and the second protective film can be appropriately selected from polyolefins such as polyethylene, polypropylene, and the like, polyvinylidene chloride, vinyl chloride resin, polyamide, and the like. Either or both of the first protective film and the second protective film may be a multilayer film.

At least one of the first protective film and the second protective film may be a release paper that is commonly used in the production of carbon fiber prepregs.

In the third step, the CBC layer may be pressurized using, for example, a press device. The press device may be, for example, a double belt press or a roll press. When the CBC is hard, the CBC layer may be heated before or during pressurizing to reduce the viscosity of the bundling liquid contained in the CBC. In this case, the temperature and heating time are adjusted so that the bundling liquid does not gel and lose its fluidity. When the viscosity of the bundling liquid increases by cooling, the CBCs in the pressurized CBC layer are bonded to each other to form a sheet.

In a preferred embodiment of the producing method, a thickening agent is added to the bundling liquid containing the CBC, and before the effect of the thickening agent is fully exerted, the first and second steps are completed, including covering the CBC layer with a second protective film and then pressurizing the CBC layer using, for example, a press device. When the bundling liquid is then sufficiently thickened, the CBCs in the pressurized CBC layer are bonded to each other to form a sheet. When the bundling liquid is thickened, the CBC layer may be held at a temperature higher than room temperature. The holding temperature and holding time are set within a range in which the bundling liquid does not cure due to the effect of a curing agent.

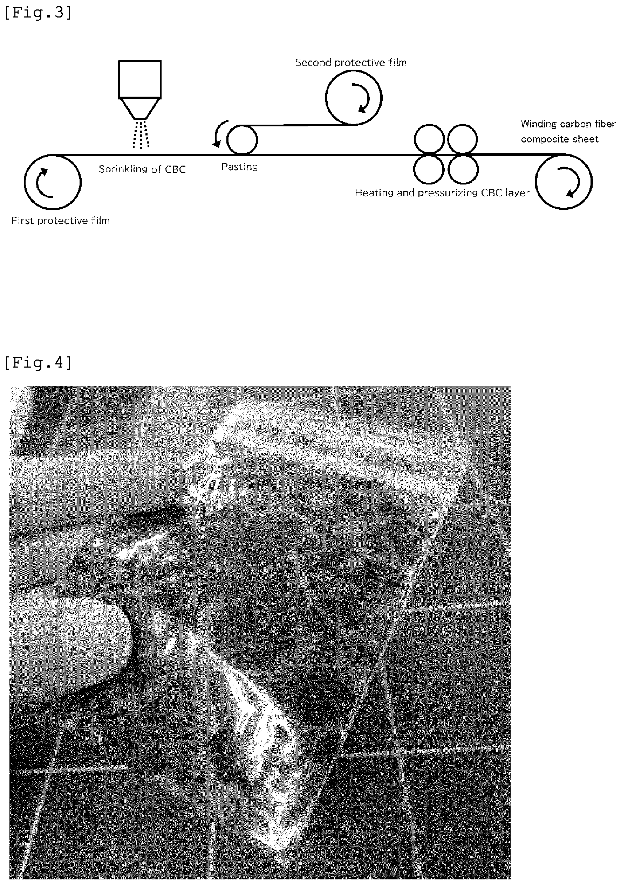

Fig. 3 shows a conceptual diagram of a producing apparatus that can be used to produce a carbon fiber composite sheet according to the above procedure.

This producing apparatus consists of a section for depositing a CBC layer by sprinkling the CBC on a first protective film unwound from a roll, a section for covering the CBC layer with a second protective film unwound from a roll, a section for pressurizing the CBC layer, and a section for winding up the carbon fiber composite sheet. In one example, a section for heating the CBC layer may be provided upstream of the section for pressurizing the CBC layer. In another example, the section for pressurizing the CBC layer may also serve as the section for heating the CBC layer.

The orientation of the CBC in the CBC layer may be random or biased in one direction. For example, the lower the running speed of the first protective film, the more random the CBC orientation becomes. When the running speed of the first protective film is increased, the CBC tends to be oriented along the running direction.

In one example, the fiber weight content of the carbon fiber composite sheet can be adjusted by supplementing the components of the bundling liquid during production of the carbon fiber composite sheet. This can be accomplished by coating the surface of the first protective film with a paste containing some or all of the components of the bundling liquid before depositing the CBC layer. Alternatively or additionally, the surface of the second protective film may be coated with the same paste before being applied to the CBC layer.

The carbon fiber composite sheet produced by the above process is, simply put, a sheet consisting a plurality of CBCs bonded together. Therefore, the following can be said.

At least 99% by weight, preferably all, of the carbon fibers contained in the carbon fiber composite sheet may have a fiber length of 60 mm or less, 50 mm or less, 40 mm or less, 30 mm or less, or 20 mm or less.

In a preferred example, the carbon fiber composite sheet contains no carbon fiber having a fiber length of less than 3 mm, or even when such a carbon fiber is contained therein, its content is less than 5 wt% based on the total carbon fibers contained in the carbon fiber composite sheet.

In a more preferred example, the carbon fiber composite sheet contains no carbon fiber having a fiber length of less than 5 mm, or even when such a carbon fiber is contained therein, its content is less than 5 wt% based on the total carbon fibers contained in the carbon fiber composite sheet.

In an even more preferred example, the carbon fiber composite sheet contains no carbon fiber having a fiber length of less than 10 mm, or even when such a carbon fiber is contained therein, its content is less than 5 wt% based on the total carbon fibers contained in the carbon fiber composite sheet.

The carbon fiber composite sheet contains a resin composition derived from the bundling liquid contained in the CBC. The components that the resin composition may contain and preferred examples of these components are the same as those in the bundling liquid contained in the CBC.

The fiber weight content in the carbon fiber composite sheet may be, for example, 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.

From the viewpoint of improving the mechanical properties of CFRP products molded using the carbon fiber composite sheet, the fiber weight content is preferably 30 wt% or more, more preferably 40 wt% or more, and even more preferably 50 wt% or more.

On the other hand, the lower the fiber weight content, the easier the carbon fiber composite sheet will flow in the mold, making it more suitable for molding CFRP products having complex shapes. From this viewpoint, the fiber weight content is preferably less than 70 wt%, and more preferably less than 60 wt%.

In this specification, the fiber weight content in a carbon fiber composite sheet containing fibers other than carbon fiber means the ratio of the total weight of carbon fibers contained in the carbon fiber composite sheet to the weight of the carbon fiber composite sheet.

The basis weight of the carbon fiber composite sheet can be designed as appropriate depending on the application. The basis weight may be, for example, 300 g/m² or more and less than 500 g/m², 500 g/m² or more and less than 1000 g/m², 1000 g/m² or more and less than 2000 g/m², 2000 g/m² or more and less than 4000 g/m², and 4000 g/m² or more and less than 6000 g/m², 6000 g/m² or more and less than 8000 g/m², or 8000 g/m² or more and less than 10000 g/m².

The thickness of the carbon fiber composite sheet can be designed to be, for example, 0.5 mm or more and less than 1.5 mm, 1.5 mm or more and less than 3 mm, or 3 mm or more and 5 mm or less, but is not limited thereto.

The carbon fiber composite sheet is a prepreg material used for molding CFRP.

As a molding method when producing a CFRP product using the carbon fiber composite sheet, a press molding method can be preferably used, but is not limited to this, and, for example, molding methods other than press molding methods such as an autoclave molding method also may be used.

### 4. Summary of the embodiments

Embodiments of the present invention include, but are not limited to, the following.
[Embodiment 1] A method for producing a carbon fiber bundle composite comprising: mixing carbon fiber fluff made of short carbon fibers and a bundling liquid containing an uncured thermosetting resin to obtain a carbon fiber bundle containing the bundling liquid; and adding a curing agent to the bundling liquid to make the bundling liquid heat thermosetting.
[Embodiment 2] The producing method according to embodiment 1, wherein the uncured thermosetting resin contains at least one selected from the group consisting of epoxy resin, vinyl ester resin, unsaturated polyester resin, and resol type phenolic resin.
[Embodiment 3] The producing method according to embodiment 1 or 2, wherein viscosity of the bundling liquid when mixed with the carbon fiber fluff is 10 Pa·s or less, preferably 5 Pa·s or less, more preferably 1 Pa·s or less, and may be 0.001 Pa·s or more.
[Embodiment 4] The producing method according to any one of embodiments 1 to 3, wherein the bundling liquid has viscosity of 10 Pa·s or less at 50°C, preferably at 40°C, more preferably at 30°C.
[Embodiment 5] The producing method according to any one of embodiments 1 to 4, wherein the bundling liquid is blended with a reactive diluent.
[Embodiment 6] The producing method according to any one of embodiments 1 to 4, wherein the bundling liquid is blended with an uncured epoxy resin and a mono-functional epoxy compound.
[Embodiment 7] The producing method according to any one of embodiments 1 to 4 and 6, wherein the bundling liquid is blended with an uncured epoxy resin and at least one of methylhexahydrophthalic anhydride and tetrahydromethylphthalic anhydride.
[Embodiment 8] The producing method according to any one of embodiments 1 to 4, 6 and 7, wherein the bundling liquid is blended with at least one of an uncured vinyl ester resin and an uncured unsaturated polyester resin, and a compound having one or two ethylenically unsaturated groups in a molecule thereof and having viscosity of 1 Pa·s or less at 25°C.
[Embodiment 9] The producing method according to any one of embodiments 1 to 8, wherein the bundling liquid is blended with a thickening agent.
[Embodiment 10] The producing method according to any one of embodiments 1 to 8, wherein the bundling liquid is blended with an uncured epoxy resin and at least one selected from the group consisting of a polyisocyanate, a carboxylic anhydride, and an amine.
[Embodiment 11] The producing method according to any one of embodiments 1 to 8, wherein the bundling liquid is blended with at least one of an uncured vinyl ester resin and an uncured unsaturated polyester resin, and a polyisocyanate.
[Embodiment 12] The producing method according to any one of embodiments 1 to 8, wherein the bundling liquid is blended with an uncured resol type phenolic resin and one or more components selected from an alkaline earth metal hydroxide, an alkaline earth metal oxide, and a polyisocyanate.
[Embodiment 13] The producing method according to any one of embodiments 9 to 12, wherein the bundling liquid is thickened after obtaining the carbon fiber bundle and adding the curing agent to the bundling liquid.
[Embodiment 14] The producing method according to any one of embodiments 9 to 13, wherein an agitation mixer having an agitation tank is used for the mixing, the carbon fiber bundles are formed in the agitation tank, and the bundling liquid is thickened while agitating the carbon fiber bundles in the agitation tank.
[Embodiment 15] The producing method according to any one of embodiments 9 to 13, wherein the bundling liquid is thickened while rolling the carbon fiber bundles in a disk pelletizer.
[Embodiment 16] The producing method according to any one of embodiments 1 to 15, wherein the bundling liquid contains an uncured epoxy resin, and the curing agent contains an epoxy curing agent.
[Embodiment 17] The producing method according to embodiment 16, wherein the epoxy curing agent contains a latent curing agent.
[Embodiment 18] The producing method according to any one of embodiments 1 to 17, wherein the bundling liquid is blended with at least one of an uncured vinyl ester resin and an uncured unsaturated polyester resin, and the curing agent contains a radical polymerization initiator.
[Embodiment 19] The producing method according to any one of embodiments 1 to 18, wherein the bundling liquid is blended with an uncured resol type phenolic resin, and the curing agent contains at least one selected from the group consisting of an organic acid, an inorganic acid, an amine, and a reaction product of at least one of a primary amine and a secondary amine with an isocyanate.
[Embodiment 20] The producing method according to any one of embodiments 1 to 19, further comprising adding a flame retardant to the bundling liquid.
[Embodiment 21] The producing method according to any one of embodiments 1 to 20, wherein at least a portion of the carbon fiber fluff is prepared by loosening chopped carbon fiber bundles.
[Embodiment 22] The producing method according to any one of embodiments 1 to 20, wherein the short carbon fibers include thermally degraded carbon fibers.
[Embodiment 23] The producing method according to any one of embodiments 1 to 20 and 22, wherein fibers other than carbon fibers are mixed in the carbon fiber fluff, and the fibers other than carbon fibers may be glass fibers.
[Embodiment 24] The producing method according to any one of embodiments 1 to 23, wherein all or at least 99% by weight of the short carbon fibers have a fiber length of 60 mm or less, 50 mm or less, 40 mm or less, 30 mm or less, or 20 mm or less.
[Embodiment 25] The producing method according to any one of embodiments 1 to 24, wherein the carbon fiber bundle has a bundle length of 3 mm or more, 5 mm or more, or 10 mm or more.
[Embodiment 26] The producing method according to any one of embodiments 1 to 24, wherein the carbon fiber bundle contains no carbon fiber having a fiber length of less than 3 mm, or even when such a carbon fiber is contained therein, its content is less than 5 wt% based on the total carbon fibers contained in the carbon fiber bundle.
[Embodiment 27] The producing method according to any one of embodiments 1 to 24, wherein the carbon fiber bundle contains no carbon fiber having a fiber length of less than 5 mm, or even when such a carbon fiber is contained therein, its content is less than 5 wt% based on the total carbon fibers contained in the carbon fiber bundle.
[Embodiment 28] The producing method according to any one of embodiments 1 to 24, wherein the carbon fiber bundle contains no carbon fiber having a fiber length of less than 10 mm, or even when such a carbon fiber is contained therein, its content is less than 5 wt% based on the total carbon fibers contained in the carbon fiber bundle.
[Embodiment 29] The producing method according to any one of embodiments 1 to 28, wherein the fiber weight content of the carbon fiber bundle is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.
[Embodiment 30] A method for producing a carbon fiber bundle composite comprising: forming a carbon fiber bundle containing a bundling liquid by agglomerating discontinuous carbon fibers with the bundling liquid, the bundling liquid being a resin composition containing an uncured thermosetting resin and a curing agent.
[Embodiment 31] The producing method according to embodiment 30, wherein the uncured thermosetting resin contains at least one selected from the group consisting of epoxy resin, vinyl ester resin, unsaturated polyester resin, resol type phenolic resin, (meth)acrylate other than epoxy vinyl ester, and diallyl phthalate.
[Embodiment 32] The producing method according to embodiment 30 or 31, wherein the bundling liquid further contains a reactive diluent.
[Embodiment 33] The producing method according to any one of embodiments 30 to 32, wherein the bundling liquid further contains a thickening agent.
[Embodiment 34] The producing method according to embodiment 33, further comprising thickening the bundling liquid after forming the carbon fiber bundle.
[Embodiment 35] The producing method according to any one of embodiments 30 to 34, wherein the discontinuous carbon fibers include recycled carbon fibers.
[Embodiment 36] The producing method according to embodiment 35, wherein the recycled carbon fibers include thermally degraded carbon fibers.
[Embodiment 37] The producing method according to any one of embodiments 30 to 36, wherein all or at least 99% by weight of the discontinuous carbon fibers have a fiber length of 60 mm or less, 50 mm or less, 40 mm or less, 30 mm or less, or 20 mm or less.
[Embodiment 38] The producing method according to any one of embodiments 30 to 37, wherein the carbon fiber bundle has a bundle length of 3 mm or more, 5 mm or more, or 10 mm or more.
[Embodiment 39] The producing method according to any one of embodiments 30 to 37, wherein the carbon fiber bundle contains no carbon fiber having a fiber length of less than 3 mm, or even when such a carbon fiber is contained therein, its content is less than 5 wt% based on the total carbon fibers contained in the carbon fiber bundle.
[Embodiment 40] The producing method according to any one of embodiments 30 to 37, wherein the carbon fiber bundle contains no carbon fiber having a fiber length of less than 5 mm, or even when such a carbon fiber is contained therein, its content is less than 5 wt% based on the total carbon fibers contained in the carbon fiber bundle.
[Embodiment 41] The producing method according to any one of embodiments 30 to 37, wherein the carbon fiber bundle contains no carbon fiber having a fiber length of less than 10 mm, or even when such a carbon fiber is contained therein, its content is less than 5 wt% based on the total carbon fibers contained in the carbon fiber bundle.
[Embodiment 42] The producing method according to any one of embodiments 30 to 41, wherein the fiber weight content of the carbon fiber bundle is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.
[Embodiment 43] The producing method according to embodiment 42, wherein the fiber weight content is 30 wt% or more and less than 70 wt%, preferably 40 wt% or more and less than 60 wt%.
[Embodiment 44] A carbon fiber bundle composite produced by the producing method according to any one of embodiments 1 to 43.
[Embodiment 45] A method for producing a carbon fiber composite sheet comprising: mixing carbon fiber fluff made of short carbon fibers and a bundling liquid containing an uncured thermosetting resin to obtain a carbon fiber bundle containing the bundling liquid; making the bundling liquid thermosetting by adding a curing agent; and bonding a plurality of the carbon fiber bundles to each other after adding the curing agent to the bundling liquid.
[Embodiment 46] The producing method according to embodiment 45, wherein the uncured thermosetting resin contains at least one selected from the group consisting of epoxy resin, vinyl ester resin, unsaturated polyester resin, and resol type phenolic resin.
[Embodiment 47] The producing method according to embodiment 45 or 46, wherein viscosity of the bundling liquid when mixed with the carbon fiber fluff is 10 Pa·s or less, preferably 5 Pa·s or less, more preferably 1 Pa·s or less, and may be 0.001 Pa·s or more.
[Embodiment 48] The producing method according to any one of embodiments 45 to 47, wherein the bundling liquid has viscosity of 10 Pa·s or less at 50°C, preferably 40°C, more preferably 30°C.
[Embodiment 49] The producing method according to any one of embodiments 45 to 48, wherein the bundling liquid is blended with a reactive diluent.
[Embodiment 50] The producing method according to any one of embodiments 45 to 48, wherein the bundling liquid is blended with an uncured epoxy resin and a mono-functional epoxy compound.
[Embodiment 51] The producing method according to any one of embodiments 45 to 48 and 50, wherein the bundling liquid blended with an uncured epoxy resin and at least one of methylhexahydrophthalic anhydride and tetrahydromethylphthalic anhydride.
[Embodiment 52] The producing method according to any one of embodiments 45 to 48, 50 and 51, wherein the bundling liquid is blended with at least one of an uncured vinyl ester resin and an uncured unsaturated polyester resin, and a compound having one or two ethylenically unsaturated groups in the molecule and having viscosity of 1 Pa·s or less at 25°C.
[Embodiment 53] The producing method according to any one of embodiments 45 to 52, wherein the bundling liquid is blended with a thickening agent.
[Embodiment 54] The producing method according to any one of embodiments 45 to 52, wherein the bundling liquid is blended with an uncured epoxy resin and at least one selected from the group consisting of a polyisocyanate, a carboxylic anhydride, and an amine.
[Embodiment 55] The producing method according to any one of embodiments 45 to 52, wherein the bundling liquid is blended with at least one of an uncured vinyl ester resin and an uncured unsaturated polyester resin, and a polyisocyanate.
[Embodiment 56] The producing method according to any one of embodiments 45 to 52, wherein the bundling liquid is blended with an uncured resol type phenolic resin and at least one selected from the group consisting of an alkaline earth metal hydroxide, an alkaline earth metal oxide, and a polyisocyanate.
[Embodiment 57] The producing method according to any one of embodiments 53 to 56, comprising thickening the bundling liquid while contacting the plurality of the carbon fiber bundles with each other after adding the curing agent to the bundling liquid.
[Embodiment 58] The producing method according to any one of embodiments 45 to 57, wherein the bundling liquid contains an uncured epoxy resin, and the curing agent contains an epoxy curing agent.
[Embodiment 59] The producing method according to embodiment 57, wherein the epoxy curing agent contains a latent curing agent.
[Embodiment 60] The producing method according to any one of embodiments 45 to 59, wherein the bundling liquid is blended with at least one of an uncured vinyl ester resin and an uncured unsaturated polyester resin, and the curing agent contains a radical polymerization initiator.
[Embodiment 61] The producing method according to any one of embodiments 45 to 60, wherein the bundling liquid is blended with an uncured resol type phenolic resin, and the curing agent contains at least one selected from the group consisting of an organic acid, an inorganic acid, an amine, and a reaction product of at least one of a primary amine and a secondary amine with an isocyanate.
[Embodiment 62] The producing method according to any one of embodiments 45 to 61, further comprising adding a flame retardant to the bundling liquid.
[Embodiment 63] The producing method according to any one of embodiments 45 to 62, wherein at least a portion of the carbon fiber fluff is prepared by loosening chopped carbon fiber bundles.
[Embodiment 64] The producing method according to any one of embodiments 45 to 62, wherein the short carbon fibers include thermally degraded carbon fibers.
[Embodiment 65] The producing method according to any one of embodiments 45 to 62 and 64, wherein fibers other than carbon fibers are mixed in the carbon fiber fluff, and the fibers other than carbon fibers may be glass fibers.
[Embodiment 66] The producing method according to any one of embodiments 45 to 65, wherein all or at least 99% by weight of the short carbon fibers have a fiber length of 60 mm or less, 50 mm or less, 40 mm or less, 30 mm or less, or 20 mm or less.
[Embodiment 67] The producing method according to any one of embodiments 45 to 66, wherein the carbon fiber bundle has a bundle length of 3 mm or more, 5 mm or more, or 10 mm or more.
[Embodiment 68] The producing method according to any one of embodiments 45 to 66, wherein the carbon fiber composite sheet contains no carbon fiber having a fiber length of less than 3 mm, or even when such a carbon fiber is contained therein, its content is less than 5 wt% based on the total carbon fibers contained in the carbon fiber composite sheet.
[Embodiment 69] The producing method according to any one of embodiments 45 to 66, wherein the carbon fiber composite sheet contains no carbon fiber having a fiber length of less than 5 mm, or even when such a carbon fiber is contained therein, its content is less than 5 wt% based on the total carbon fibers contained in the carbon fiber composite sheet.
[Embodiment 70] The producing method according to any one of embodiments 45 to 66, wherein the carbon fiber composite sheet contains no carbon fiber having a fiber length of less than 10 mm, or even when such a carbon fiber is contained therein, its content is less than 5 wt% based on the total carbon fibers contained in the carbon fiber composite sheet.
[Embodiment 71] The producing method according to any one of embodiments 45 to 70, wherein the fiber weight content of the carbon fiber composite sheet is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.
[Embodiment 72] A method for producing a carbon fiber composite sheet comprising: forming a carbon fiber bundle containing a bundling liquid by agglomerating discontinuous carbon fibers with the bundling liquid, and bonding a plurality of the carbon fiber bundles together, wherein the bundling liquid is a resin composition containing an uncured thermosetting resin and a curing agent.
[Embodiment 73] A method for producing a carbon fiber composite sheet comprising: bonding a plurality of carbon fiber bundles together by bringing the carbon fiber bundles into contact with each other and thickening a bundling liquid contained in each of the carbon fiber bundles, wherein discontinuous carbon fibers in each of the carbon fiber bundles are agglomerated by the bundling liquid, and the bundling liquid is a resin composition containing an uncured thermosetting resin, a curing agent, and a thickening agent.
[Embodiment 74] A method for producing a carbon fiber composite sheet comprising: depositing a plurality of carbon fiber bundles to form a carbon fiber bundle layer; compressing the carbon fiber bundle layer; and thereafter thickening a bundling liquid contained in each of the carbon fiber bundles, wherein discontinuous carbon fibers in each of the carbon fiber bundles are agglomerated by the bundling liquid, and the bundling liquid is a resin composition containing an uncured thermosetting resin, a curing agent, and a thickening agent.
[Embodiment 75] The producing method according to any one of embodiments 72 to 74, wherein the uncured thermosetting resin contains at least one selected from the group consisting of epoxy resin, vinyl ester resin, unsaturated polyester resin, resol type phenolic resin, (meth)acrylate other than epoxy vinyl ester, and diallyl phthalate.
[Embodiment 76] The producing method according to any one of embodiments 72 to 75, wherein the bundling liquid further contains a reactive diluent.
[Embodiment 77] The method according to any one of embodiments 72 to 76, wherein the discontinuous carbon fibers contain recycled carbon fibers.
[Embodiment 78] The producing method according to embodiment 77, wherein the recycled carbon fibers include thermally degraded carbon fibers.
[Embodiment 79] The producing method according to any one of embodiments 72 to 78, wherein all or at least 99% by weight of the carbon fibers contained in the carbon fiber composite sheet have a fiber length of 60 mm or less, 50 mm or less, 40 mm or less, 30 mm or less, or 20 mm or less.
[Embodiment 80] The producing method according to any one of embodiments 72 to 79, wherein the plurality of the carbon fiber bundles each have a bundle length of 3 mm or more, 5 mm or more, or 10 mm or more.
[Embodiment 81] The producing method according to any one of embodiments 72 to 80, wherein the carbon fiber composite sheet contains no carbon fiber having a fiber length of less than 3 mm, or even when such a carbon fiber is contained therein, its content is less than 5 wt% based on the total carbon fibers contained in the carbon fiber composite sheet.
[Embodiment 82] The producing method according to any one of embodiments 72 to 80, wherein the carbon fiber composite sheet contains no carbon fiber having a fiber length of less than 5 mm, or even when such a carbon fiber is contained therein, its content is less than 5 wt% based on the total carbon fibers contained in the carbon fiber composite sheet.
[Embodiment 83] The producing method according to any one of embodiments 72 to 80, wherein the carbon fiber composite sheet contains no carbon fiber having a fiber length of less than 10 mm, or even when such a carbon fiber is contained therein, its content is less than 5 wt% based on the total carbon fibers contained in the carbon fiber composite sheet.
[Embodiment 84] The producing method according to any one of embodiments 72 to 83, wherein the fiber weight content of the carbon fiber composite sheet is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.
[Embodiment 85] The producing method according to embodiment 84, wherein the fiber weight content is 30 wt% or more and less than 70 wt%, preferably 40 wt% or more and less than 60 wt%.
[Embodiment 86] A carbon fiber composite sheet producing by the producing method according to any one of embodiments 45 to 85.
[Embodiment 87] A producing method for a CFRP product comprising heating and pressurizing the carbon fiber bundle composite according to embodiment 44 or the carbon fiber composite sheet according to embodiment 86 in a mold to cure it.

### 5. Experimental result

The results of experiments conducted by the present inventors are described below.

The materials used in each experiment are as follows.
Carbon fiber: Fluffy carbon fiber obtained by drying water-sized chopped carbon fiber having a fiber length of 6 mm at 120°C for 1 hour and then loosening it by hand
Epoxy resin 1: jER (registered trademark) 807 manufactured by Mitsubishi Chemical Corporation, bisphenol F type epoxy resin
Epoxy resin 2: TETRAD-X (registered trademark) manufactured by Mitsubishi Gas Chemical Company, Inc., containing N,N,N',N'-tetraglycidyl-m-xylylenediamine as a component
Epoxy curing agent 1: Curesol 2MZA-PW manufactured by Shikoku Chemicals Corporation, containing 2,4-diamino-6-[2'-methylimidazole-(1')]-ethyl-s-triazine as a component
Epoxy curing agent 2: Amicure (registered trademark) PN-23J manufactured by Ajinomoto Fine-Techno Co., Inc., an amine adduct-based latent curing agent for epoxy resin
Thickening agent: HN-2200 manufactured by Resonac Corporation, containing 3or4-methyl-1,2,3,6-tetrahydrophthalic anhydride as a component

### [Preparation of bundling liquid]

A bundling liquid was prepared by mixing epoxy resin, epoxy curing agent, and thickening agent in a weight ratio shown in Table 1.

**[Table 1]**

| Component | Weight ratio |
|---|---|
| Epoxy resin 1 | 95 |
| Epoxy resin 2 | 5 |
| Curing agent 1 | 4 |
| Curing agent 2 | 4 |
| Thickening agent | 12 |

Immediately after preparation, the viscosity of the bundling liquid was measured with a B-type rotational viscometer (LVDV-1 manufactured by Brookfield, spindle S63, 10 rpm), and found to be 4 Pa·s at 22°C. After this bundling liquid was allowed to stand at 22°C for 6 days, its viscosity was measured again with a B-type rotational viscometer (digital viscometer HBDVE manufactured by Brookfield, spindle S07, 10 rpm) and found to be 470 Pa·s at 22°C.

### [Experiment 1]

30 g of carbon fibers and 16.2 g of the bundling liquid were placed in a 500 mL plastic container (500 mL PP Flat Bottle of AS ONE Corporation) and shaken by hand for about 5 minutes. By being mixed with the bundling liquid, the carbon fibers formed bundles. When the contents of the container were observed after shaking, no carbon fibers were found that were not involved in the formation of bundles, and all bundles were seed-shaped (spindle-shaped), and almost all of them had bundle lengths in the range of 10 to 20 mm and maximum diameters in the range of 3 to 5 mm. The maximum diameter is the diameter of the bundle at the point where the bundle is thickest, and may be said to be the diameter of the bundle at the center in the longitudinal direction (fiber direction) (the same applies below).

### [Experiment 2]

The carbon fibers and the bundling liquid were placed in a container and shaken in the same manner as in Experiment 1, except that the amount of the bundling liquid was increased to 20.0 g. When the contents of the container were observed after shaking, no carbon fibers were found that were not involved in the formation of bundles, and all bundles were seed-shaped (spindle-shaped), and almost all of them had bundle lengths in the range of 15 to 25 mm and maximum diameters in the range of 5 to 10 mm.

### [Experiment 3]

The carbon fibers and the bundling liquid were placed in a container and shaken in the same manner as in Experiment 1, except that the amount of the carbon fibers was reduced to 20 g and the amount of the bundling liquid was increased to 20.0 g. When the contents of the container were observed after shaking, no carbon fibers were found that were not involved in the formation of bundles, and all bundles were seed-shaped (spindle-shaped), and almost all of them had bundle lengths in the range of 20 to 30 mm and maximum diameters in the range of 10 to 20 mm.

### [Experiment 4]

Using a press mold consisting of cavity having a flat bottom surface of 100 mm x 60 mm and a core, a CFRP plate having a length and a width of 100 mm x 60 mm was molded from 15 g of the carbon fiber bundle composite obtained in Experiment 2. The press time was 1 hour and 30 minutes, with the temperature being 150°C and the pressure being 8 MPa for the first 30 minutes, and then the temperature being 180°C and the pressure being 8 MPa for the subsequent one hour.

The obtained CFRP plate had a smooth surface, a thickness of 2.5 mm, and a density of 0.92 g/cm³.

### [Experiment 5]

15 g of the carbon fiber bundle composite immediately after it was prepared using the same procedure as in Experiment 2, was placed in a plastic bag having a zipper and having a length and a width of 100 mm x 70 mm. The plastic bag was placed on a flat table, and press a bottom of a beaker onto the plastic bag by hand to crush the carbon fiber composite inside the plastic bag, as shown in Fig. 4.

The carbon fiber bundles were not strongly bonded to each other immediately after crushing, and the contents of the plastic bag could not be handled as a self-supporting sheet.

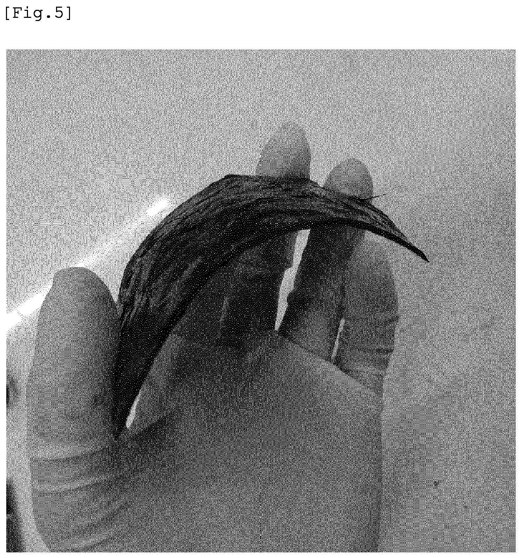

However, when the plastic bag containing the contents was allowed to stand at 22°C for 6 days after crushing, the contents in the plastic bag were transformed into a self-supporting sheet. This sheet did not break even when bent, as shown in Fig. 5.

In addition, when the seed-shaped carbon fiber bundle composites were allowed to stand at 22°C for 6 days, they became too hard to be crushed by the above method, and they were not possible to bond together.

### [Experiment 6]

The carbon fiber composite sheet obtained in Experiment 5 was cut to a piece having a length and a width of 90 mm x 50 mm, and the piece was used to mold a CFRP plate having a length and a width of 100 mm x 60 mm. The press mold used and molding conditions were the same as those in Experiment 4. The area of the carbon fiber composite sheet placed in the press mold was 75% of the area of the bottom surface of the cavity of the press mold, which indicates that the carbon fiber composite sheet flowed during molding.

The obtained CFRP plate had a smooth surface, a thickness of 1.2 mm, and a density of 1.58 g/cm³.

Although the present invention has been described above with reference to specific embodiments, each embodiment is presented as an example and does not limit the scope of the present invention. Each embodiment described in this specification can be variously modified within the scope where the effects of the invention can be achieved, and the features described in other embodiments may be combined within the scope of practicability.

The present application is based on Japanese Patent Application No. 2022-137548 filed on August 31, 2022, and the entire contents of which are incorporated herein by reference.

### Industrial Availability

The carbon fiber bundle composites and carbon fiber composite sheets obtained by the producing methods according to each embodiment can be preferably used when producing various CFRP parts for automobiles, motorcycles, bicycles, ships, railroad cars, manned aircraft, unmanned aircraft, other transportation equipment, as well as sporting goods, leisure goods, home appliances, agricultural equipment, construction materials, and the like.

## Claims

1. A method for producing a carbon fiber bundle composite comprising:
mixing carbon fiber fluff made of short carbon fibers and a bundling liquid containing an uncured thermosetting resin to obtain a carbon fiber bundle containing the bundling liquid; and
adding a curing agent to the bundling liquid to make the bundling liquid thermosetting.

2. The producing method according to claim 1, wherein the uncured thermosetting resin contains at least one selected from the group consisting of epoxy resin, vinyl ester resin, unsaturated polyester resin, and resol type phenolic resin.

3. The producing method according to claim 1 or 2, wherein viscosity of the bundling liquid when mixed with the carbon fiber fluff is 10 Pa·s or less, preferably 5 Pa·s or less, more preferably 1 Pa·s or less, and may be 0.001 Pa·s or more.

4. The producing method according to any one of claims 1 to 3, wherein the bundling liquid has viscosity of 10 Pa·s or less at 50°C, preferably at 40°C, more preferably at 30°C.

5. The producing method according to any one of claims 1 to 4, wherein the bundling liquid is blended with a reactive diluent.

6. The producing method according to any one of claims 1 to 4, wherein the bundling liquid is blended with an uncured epoxy resin and a mono-functional epoxy compound.

7. The producing method according to any one of claims 1 to 4 and 6, wherein the bundling liquid is blended with an uncured epoxy resin and at least one of methylhexahydrophthalic anhydride and tetrahydromethylphthalic anhydride.

8. The producing method according to any one of claims 1 to 4, 6 and 7, wherein the bundling liquid is blended with at least one of an uncured vinyl ester resin and an uncured unsaturated polyester resin, and a compound having one or two ethylenically unsaturated groups in a molecule thereof and having viscosity of 1 Pa·s or less at 25°C.

9. The producing method according to any one of claims 1 to 8, wherein the bundling liquid is blended with a thickening agent.

10. The producing method according to any one of claims 1 to 8, wherein the bundling liquid is blended with an uncured epoxy resin and at least one selected from the group consisting of a polyisocyanate, a carboxylic anhydride, and an amine.

11. The producing method according to any one of claims 1 to 8, wherein the bundling liquid is blended with at least one of an uncured vinyl ester resin and an uncured unsaturated polyester resin, and a polyisocyanate.

12. The producing method according to any one of claims 1 to 8, wherein the bundling liquid is blended with an uncured resol type phenolic resin and one or more components selected from an alkaline earth metal hydroxide, an alkaline earth metal oxide, and a polyisocyanate.

13. The producing method according to any one of claims 9 to 12, wherein the bundling liquid is thickened after obtaining the carbon fiber bundle and adding the curing agent to the bundling liquid.

14. The producing method according to any one of claims 9 to 13, wherein an agitation mixer having an agitation tank is used for the mixing, the carbon fiber bundles are formed in the agitation tank, and the bundling liquid is thickened while agitating the carbon fiber bundles in the agitation tank.

15. The producing method according to any one of claims 9 to 13, wherein the bundling liquid is thickened while rolling the carbon fiber bundles in a disk pelletizer.

16. The producing method according to any one of claims 1 to 15, wherein the bundling liquid contains an uncured epoxy resin, and the curing agent contains an epoxy curing agent.

17. The producing method according to claim 16, wherein the epoxy curing agent contains a latent curing agent.

18. The producing method according to any one of claims 1 to 17, wherein the bundling liquid is blended with at least one of an uncured vinyl ester resin and an uncured unsaturated polyester resin, and the curing agent contains a radical polymerization initiator.

19. The producing method according to any one of claims 1 to 18, wherein the bundling liquid is blended with an uncured resol type phenolic resin, and the curing agent contains at least one selected from the group consisting of an organic acid, an inorganic acid, an amine, and a reaction product of at least one of a primary amine and a secondary amine with an isocyanate.

20. The producing method according to any one of claims 1 to 19, further comprising adding a flame retardant to the bundling liquid.

21. The producing method according to any one of claims 1 to 20, wherein at least a portion of the carbon fiber fluff is prepared by loosening chopped carbon fiber bundles.

22. The producing method according to any one of claims 1 to 20, wherein the short carbon fibers include thermally degraded carbon fibers.

23. The producing method according to any one of claims 1 to 20 and 22, wherein fibers other than carbon fibers are mixed in the carbon fiber fluff, and the fibers other than carbon fibers may be glass fibers.

24. The producing method according to any one of claims 1 to 23, wherein all or at least 99% by weight of the short carbon fibers have a fiber length of 60 mm or less, 50 mm or less, 40 mm or less, 30 mm or less, or 20 mm or less.

25. The producing method according to any one of claims 1 to 24, wherein the carbon fiber bundle has a bundle length of 3 mm or more, 5 mm or more, or 10 mm or more.

26. The producing method according to any one of claims 1 to 24, wherein the carbon fiber bundle contains no carbon fiber having a fiber length of less than 3 mm, or even when such a carbon fiber is contained therein, its content is less than 5 wt% based on the total carbon fibers contained in the carbon fiber bundle.

27. The producing method according to any one of claims 1 to 24, wherein the carbon fiber bundle contains no carbon fiber having a fiber length of less than 5 mm, or even when such a carbon fiber is contained therein, its content is less than 5 wt% based on the total carbon fibers contained in the carbon fiber bundle.

28. The producing method according to any one of claims 1 to 24, wherein the carbon fiber bundle contains no carbon fiber having a fiber length of less than 10 mm, or even when such a carbon fiber is contained therein, its content is less than 5 wt% based on the total carbon fibers contained in the carbon fiber bundle.

29. The producing method according to any one of claims 1 to 28, wherein the fiber weight content of the carbon fiber bundle is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.

30. A method for producing a carbon fiber bundle composite comprising:
forming a carbon fiber bundle containing a bundling liquid by agglomerating discontinuous carbon fibers with the bundling liquid,
the bundling liquid being a resin composition containing an uncured thermosetting resin and a curing agent.

31. The producing method according to claim 30, wherein the uncured thermosetting resin contains at least one selected from the group consisting of epoxy resin, vinyl ester resin, unsaturated polyester resin, resol type phenolic resin, (meth)acrylate other than epoxy vinyl ester, and diallyl phthalate.

32. The producing method according to claim 30 or 31, wherein the bundling liquid further contains a reactive diluent.

33. The producing method according to any one of claims 30 to 32, wherein the bundling liquid further contains a thickening agent.

34. The producing method according to claim 33, further comprising thickening the bundling liquid after forming the carbon fiber bundle.

35. The producing method according to any one of claims 30 to 34, wherein the discontinuous carbon fibers include recycled carbon fibers.

36. The producing method according to claim 35, wherein the recycled carbon fibers include thermally degraded carbon fibers.

37. The producing method according to any one of claims 30 to 36, wherein all or at least 99% by weight of the discontinuous carbon fibers have a fiber length of 60 mm or less, 50 mm or less, 40 mm or less, 30 mm or less, or 20 mm or less.

38. The producing method according to any one of claims 30 to 37, wherein the carbon fiber bundle has a bundle length of 3 mm or more, 5 mm or more, or 10 mm or more.

39. The producing method according to any one of claims 30 to 37, wherein the carbon fiber bundle contains no carbon fiber having a fiber length of less than 3 mm, or even when such a carbon fiber is contained therein, its content is less than 5 wt% based on the total carbon fibers contained in the carbon fiber bundle.

40. The producing method according to any one of claims 30 to 37, wherein the carbon fiber bundle contains no carbon fiber having a fiber length of less than 5 mm, or even when such a carbon fiber is contained therein, its content is less than 5 wt% based on the total carbon fibers contained in the carbon fiber bundle.

41. The producing method according to any one of claims 30 to 37, wherein the carbon fiber bundle contains no carbon fiber having a fiber length of less than 10 mm, or even when such a carbon fiber is contained therein, its content is less than 5 wt% based on the total carbon fibers contained in the carbon fiber bundle.

42. The producing method according to any one of claims 30 to 41, wherein the fiber weight content of the carbon fiber bundle is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.

43. The producing method according to claim 42, wherein the fiber weight content is 30 wt% or more and less than 70 wt%, preferably 40 wt% or more and less than 60 wt%.

44. A carbon fiber bundle composite produced by the producing method according to any one of claims 1 to 43.

45. A method for producing a carbon fiber composite sheet comprising:
mixing carbon fiber fluff made of short carbon fibers and a bundling liquid containing an uncured thermosetting resin to obtain a carbon fiber bundle containing the bundling liquid;
making the bundling liquid thermosetting by adding a curing agent; and
bonding a plurality of the carbon fiber bundles to each other after adding the curing agent to the bundling liquid.

46. The producing method according to claim 45, wherein the uncured thermosetting resin contains at least one selected from the group consisting of epoxy resin, vinyl ester resin, unsaturated polyester resin, and resol type phenolic resin.

47. The producing method according to claim 45 or 46, wherein viscosity of the bundling liquid when mixed with the carbon fiber fluff is 10 Pa·s or less, preferably 5 Pa·s or less, more preferably 1 Pa·s or less, and may be 0.001 Pa·s or more.

48. The producing method according to any one of claims 45 to 47, wherein the bundling liquid has viscosity of 10 Pa·s or less at 50°C, preferably 40°C, more preferably 30°C.

49. The producing method according to any one of claims 45 to 48, wherein the bundling liquid is blended with a reactive diluent.

50. The producing method according to any one of claims 45 to 48, wherein the bundling liquid is blended with an uncured epoxy resin and a mono-functional epoxy compound.

51. The producing method according to any one of claims 45 to 48 and 50, wherein the bundling liquid blended with an uncured epoxy resin and at least one of methylhexahydrophthalic anhydride and tetrahydromethylphthalic anhydride.

52. The producing method according to any one of claims 45 to 48, 50 and 51, wherein the bundling liquid is blended with at least one of an uncured vinyl ester resin and an uncured unsaturated polyester resin, and a compound having one or two ethylenically unsaturated groups in the molecule and having viscosity of 1 Pa·s or less at 25°C.

53. The producing method according to any one of claims 45 to 52, wherein the bundling liquid is blended with a thickening agent.

54. The producing method according to any one of claims 45 to 52, wherein the bundling liquid is blended with an uncured epoxy resin and at least one selected from the group consisting of a polyisocyanate, a carboxylic anhydride, and an amine.

55. The producing method according to any one of claims 45 to 52, wherein the bundling liquid is blended with at least one of an uncured vinyl ester resin and an uncured unsaturated polyester resin, and a polyisocyanate.

56. The producing method according to any one of claims 45 to 52, wherein the bundling liquid is blended with an uncured resol type phenolic resin and at least one selected from the group consisting of an alkaline earth metal hydroxide, an alkaline earth metal oxide, and a polyisocyanate.

57. The producing method according to any one of claims 53 to 56, comprising thickening the bundling liquid while contacting the plurality of the carbon fiber bundles with each other after adding the curing agent to the bundling liquid.

58. The producing method according to any one of claims 45 to 57, wherein the bundling liquid contains an uncured epoxy resin, and the curing agent contains an epoxy curing agent.

59. The producing method according to claim 57, wherein the epoxy curing agent contains a latent curing agent.

60. The producing method according to any one of claims 45 to 59, wherein the bundling liquid is blended with at least one of an uncured vinyl ester resin and an uncured unsaturated polyester resin, and the curing agent contains a radical polymerization initiator.

61. The producing method according to any one of claims 45 to 60, wherein the bundling liquid is blended with an uncured resol type phenolic resin, and the curing agent contains at least one selected from the group consisting of an organic acid, an inorganic acid, an amine, and a reaction product of at least one of a primary amine and a secondary amine with an isocyanate.

62. The producing method according to any one of claims 45 to 61, further comprising adding a flame retardant to the bundling liquid.

63. The producing method according to any one of claims 45 to 62, wherein at least a portion of the carbon fiber fluff is prepared by loosening chopped carbon fiber bundles.

64. The producing method according to any one of claims 45 to 62, wherein the short carbon fibers include thermally degraded carbon fibers.

65. The producing method according to any one of claims 45 to 62 and 64, wherein fibers other than carbon fibers are mixed in the carbon fiber fluff, and the fibers other than carbon fibers may be glass fibers.

66. The producing method according to any one of claims 45 to 65, wherein all or at least 99% by weight of the short carbon fibers have a fiber length of 60 mm or less, 50 mm or less, 40 mm or less, 30 mm or less, or 20 mm or less.

67. The producing method according to any one of claims 45 to 66, wherein the carbon fiber bundle has a bundle length of 3 mm or more, 5 mm or more, or 10 mm or more.

68. The producing method according to any one of claims 45 to 66, wherein the carbon fiber composite sheet contains no carbon fiber having a fiber length of less than 3 mm, or even when such a carbon fiber is contained therein, its content is less than 5 wt% based on the total carbon fibers contained in the carbon fiber composite sheet.

69. The producing method according to any one of claims 45 to 66, wherein the carbon fiber composite sheet contains no carbon fiber having a fiber length of less than 5 mm, or even when such a carbon fiber is contained therein, its content is less than 5 wt% based on the total carbon fibers contained in the carbon fiber composite sheet.

70. The producing method according to any one of claims 45 to 66, wherein the carbon fiber composite sheet contains no carbon fiber having a fiber length of less than 10 mm, or even when such a carbon fiber is contained therein, its content is less than 5 wt% based on the total carbon fibers contained in the carbon fiber composite sheet.

71. The producing method according to any one of claims 45 to 70, wherein the fiber weight content of the carbon fiber composite sheet is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.

72. A method for producing a carbon fiber composite sheet comprising:
forming a carbon fiber bundle containing a bundling liquid by agglomerating discontinuous carbon fibers with the bundling liquid, and bonding a plurality of the carbon fiber bundles together,
wherein the bundling liquid is a resin composition containing an uncured thermosetting resin and a curing agent.

73. A method for producing a carbon fiber composite sheet comprising:
bonding a plurality of carbon fiber bundles together by bringing the carbon fiber bundles into contact with each other and thickening a bundling liquid contained in each of the carbon fiber bundles,
wherein discontinuous carbon fibers in each of the carbon fiber bundles are agglomerated by the bundling liquid, and the bundling liquid is a resin composition containing an uncured thermosetting resin, a curing agent, and a thickening agent.

74. A method for producing a carbon fiber composite sheet comprising:
depositing a plurality of carbon fiber bundles to form a carbon fiber bundle layer;
compressing the carbon fiber bundle layer; and
thereafter thickening a bundling liquid contained in each of the carbon fiber bundles,
wherein discontinuous carbon fibers in each of the carbon fiber bundles are agglomerated by the bundling liquid, and the bundling liquid is a resin composition containing an uncured thermosetting resin, a curing agent, and a thickening agent.

75. The producing method according to any one of claims 72 to 74, wherein the uncured thermosetting resin contains at least one selected from the group consisting of epoxy resin, vinyl ester resin, unsaturated polyester resin, resol type phenolic resin, (meth)acrylate other than epoxy vinyl ester, and diallyl phthalate.

76. The producing method according to any one of claims 72 to 75, wherein the bundling liquid further contains a reactive diluent.

77. The method according to any one of claims 72 to 76, wherein the discontinuous carbon fibers contain recycled carbon fibers.

78. The producing method according to claim 77, wherein the recycled carbon fibers include thermally degraded carbon fibers.

79. The producing method according to any one of claims 72 to 78, wherein all or at least 99% by weight of the carbon fibers contained in the carbon fiber composite sheet have a fiber length of 60 mm or less, 50 mm or less, 40 mm or less, 30 mm or less, or 20 mm or less.

80. The producing method according to any one of claims 72 to 79, wherein the plurality of the carbon fiber bundles each have a bundle length of 3 mm or more, 5 mm or more, or 10 mm or more.

81. The producing method according to any one of claims 72 to 80, wherein the carbon fiber composite sheet contains no carbon fiber having a fiber length of less than 3 mm, or even when such a carbon fiber is contained therein, its content is less than 5 wt% based on the total carbon fibers contained in the carbon fiber composite sheet.

82. The producing method according to any one of claims 72 to 80, wherein the carbon fiber composite sheet contains no carbon fiber having a fiber length of less than 5 mm, or even when such a carbon fiber is contained therein, its content is less than 5 wt% based on the total carbon fibers contained in the carbon fiber composite sheet.

83. The producing method according to any one of claims 72 to 80, wherein the carbon fiber composite sheet contains no carbon fiber having a fiber length of less than 10 mm, or even when such a carbon fiber is contained therein, its content is less than 5 wt% based on the total carbon fibers contained in the carbon fiber composite sheet.

84. The producing method according to any one of claims 72 to 83, wherein the fiber weight content of the carbon fiber composite sheet is 20 wt% or more and less than 30 wt%, 30 wt% or more and less than 40 wt%, 40 wt% or more and less than 50 wt%, 50 wt% or more and less than 60 wt%, 60 wt% or more and less than 70 wt%, or 70 wt% or more and 80 wt% or less.

85. The producing method according to claim 84, wherein the fiber weight content is 30 wt% or more and less than 70 wt%, preferably 40 wt% or more and less than 60 wt%.

86. A carbon fiber composite sheet producing by the producing method according to any one of claims 45 to 85.

87. A producing method for a CFRP product comprising heating and pressurizing the carbon fiber bundle composite according to claim 44 or the carbon fiber composite sheet according to claim 86 in a mold to cure it.
